Europäisches Patentamt

European Patent Office

Office européen des brevets

(19)

(11) Numéro de publication: **0 399 854**
**A1**

## DEMANDE DE BREVET EUROPEEN

(21) Numéro de dépôt: **90400507.1**

(22) Date de dépôt: **23.02.90**

(51) Int. Cl.5: **A01K 1/01**

Le titre de l'invention a été modifié (Directives relatives à l'examen pratiqué à l'OEB, A-III, 7.3)

(30) Priorité: **24.02.89 FR 8902861**

(43) Date de publication de la demande:
**28.11.90 Bulletin 90/48**

(84) Etats contractants désignés:
**AT BE CH DE DK ES FR GB GR IT LI LU NL SE**

(71) Demandeur: **LANGEVINE S.A.**
**B.P. 3 Fondettes**
**F-37230 Luynes(FR)**

(72) Inventeur: **Langevine, Jean**
**Les Ruettes**

**F-37230 Fondettes(FR)**
Inventeur: **Caradec, Marcel**
**Cité de L'Air**
**F-37230 Fondettes(FR)**
Inventeur: **Remerand, Richard**
**1 rue Mariniers**
**F-37230 Luynes(FR)**
Inventeur: **Girard, Claude**
**1 rue Francis Poulenc**
**F-37230 Fondettes(FR)**

(74) Mandataire: **Chanet, Jacques**
**Conseil en Brevets 129 Avenue de Royat**
**B.P. 27**
**F-63400 Chamalières(FR)**

(54) **Ilot d'hygiène pour animaux.**

(57) La présente invention est du domaine des commodités pour animaux domestiques.

Elle a particulièrement pour objet un dispositif d'ilôt d'hygiène pour animaux comprenant une colonne pourvue d'une rampe d'aspersion, un tapis sans fin, margelle entourant le tapis et la colonne, caractérisé par le fait qu'il comporte un récipient intermédiaire 16 disposé entre le tapis sans fin 14 et le fond du bac 4, 5, ce récipient étant destiné à recevoir et à contenir de l'eau de lavage du tapis sans fin, pour pouvoir être vidangé périodiquement afin de chasser les excréments tombés du tapis sur le fond du bac, d'où il résulte l'avantage de permettre la récupération de l'eau du tapis en vue de son utilisation comme eau de chasse pour laver le bac.

Application aux aménagements urbains.

fig.1

EP 0 399 854 A1

La présente invention est à la fois du domaine de l'élevage des animaux et de celui de l'aménagement des lieux publics, et elle a plus particulièrement pour objet des perfectionnements à un îlot d'hygiène pour les animaux domestiques tels que les chiens.

On connait par le brevet FR-2530120 (PONCE,DUMARCHER) un dispositif, ou installation, d'îlot d'hygiène constitué d'une colonne pourvue d'une rampe d'aspersion, d'un tapis sans fin, d'une bordure massive entourant le tapis et la colonne et comportant un caniveau collecteur entourant le pied de la colonne ; la colonne elle-même comporte à sa partie haute une jardinière et constitue une armoire pour différents organes commandant le fonctionnement de l'îlot ; l'ensemble est disposé au-dessus d'un bac raccordé à l'égout. On pourra avantageusement se reporter à cette publication pour mieux comprendre les perfectionnements proposés. On pourra aussi, pour connaître un art antérieur plus lointain, se reporter aux publications US-4098229(HAYNES), FR-2406388-(MAILLE) FR-2488487(ZILBER), US-3793988-(TRAEGER), US-4050414(KNOCHEL,TRAEGER) et US-4242763 (WALKER).

A la connaissance de la présente Demanderesse, seul le dispositif du premier brevet cité est adapté pour fonctionner en milieu urbain, aussi bien pour les excréments liquides que solides ; cependant l'îlot précité a présenté, à l'utisation, des inconvénients tels que sa conception a dû être repensée sur un certain nombre de points ; parmi les principaux inconvénients on a relevé le fait que ce dispositif s'engorgeait et nécessitait des interventions manuelles fréquentes ; on a pu observer aussi que certains animaux, qui avaient été effrayés par le fonctionnement trop rapidement consécutif de l'installation, refusaient par la suite de l'utiliser ; on a pu observer aussi qu'il était utile de conditionner favorablement l'animal arrivant avec son maître dans le voisinage de l'installation.

Partant de ces observations la présente invention se donne pour but de proposer des perfectionnements mettant l'installation à l'abri de l'engorgement et lui évitant d'effrayer les animaux, et visant même à créer chez ces derniers une certaine accoutumance.

Selon la présente invention un dispositif d'îlot d'hygiène pour animaux, du genre de dispositif, ou installation, d'hygiène comprenant une colonne pourvue d'une rampe d'aspersion, un tapis sans fin, une bordure, ou margelle, massive entourant le tapis et la colonne, et comportant un caniveau collecteur entourant le pied de la colonne, la colonne pouvant comporter à sa partie haute une jardinière, et constituant une armoire pour différents organes commandant le fonctionnement de l'îlot, l'ensemble étant disposé au-dessus d'un bac raccordé à l'égout, est principalement caractérisé par le fait qu'il comporte un récipient intermédiaire disposé entre le tapis sans fin et le fond du bac, ce récipient étant destiné à recevoir et à contenir de l'eau de lavage du tapis sans fin, pour pouvoir être vidangé périodiquement afin de chasser les excréments tombés du tapis sur le fond du bac. Cette disposition présente l'avantage de permettre la récupération de l'eau du tapis en vue de son utilisation comme eau de chasse pour laver le bac.

Suivant une forme particulière préférée de réalisation, le récipient intermédiaire a un forme prismatique applatie et il est articulé autour d'un axe horizontal, la répartition de la masse et du volume intérieur du récipient, par rapport à l'axe d'articulation, étant telle que lorsqu'il est rempli d'une certaine quantité d'eau s'écoulant du tapis il déverse brusquement son contenu dans le bac, et qu'après s'être vidangé de son contenu il reprenne une position horizontale dans laquelle il peut recevoir à nouveau une certaine quantité d'eau et éventuellement d'excréments en provenance du tapis. Cette disposition présente l'avantage de lier de façon automatique le fonctionnement de la chasse à l'utilisation qui est faite de l'installation.

Suivant une caractéristique secondaire importante de l'invention, le bac est une cuve massive en béton dont toutes les faces internes sont inclinées en direction de la partie médiane longitunale, elle-même inclinée en direction de l'égout.

Il résulte de la mise en oeuvre des moyens de chasse sus-définis, et de la conformation du fond du bac, une possibilité de lavage très efficace et économique de l'installation au fur et à mesure de son fonctionnement, et une éliminination quasi-totale des risques d'engorgement.

De préférence il est prévu sur la colonne des moyens manuels d'enclenchement du cycle de lavage.

De préférence encore le dispositif incorpore des moyens d'émission et de réception d'ondes hyperfrécence (radar) pour détecter une présence quelconque dans le voisinage immédiat de l'îlot et, dans ce cas, interdire le fonctionnement des moyens de lavage.

Il résulte de ces dispositions que, le cycle de lavage ayant été enclenché par le maître du chien, ce cycle ne pourra s'effectuer que lorsque le chien et son maître auront quitté le voisinage de l'îlot, ce qui évitera au chien d'être effrayé par le fonctionnement du tapis et des moyens d'aspersion.

De préférence encore ledit îlot incorpore des moyens d'émission d'un signal ultrasonore perceptible par les chiens, fonctionnant en permanence et destiné à créer chez les chiens une accoutumance à faire leurs besoins lorsqu'ils arrivent dans le voisinage de l'îlot.

La présente invention sera mieux comprise, et des détails en relevant apparaîtront à la description qui va être faite d'une forme particulière de réalisation d'un îlot d'hygiène conforme à l'invention, en relation avec les figures des planches annexées dans lesquelles :

-la fig.1· est une coupe longitudinale schématique d'un dispositif de l'invention dans sa forme préférée de réalisation, (la fig.1a est une coupe transversale du même),

-la fig.2 est une perspective partiellement écorchée d'un tapis sans fin équipant le dispositif de la fig.1, et

-la fig.3 est un schéma synoptique du circuit hydraulique et des organes fonctionnels du même.

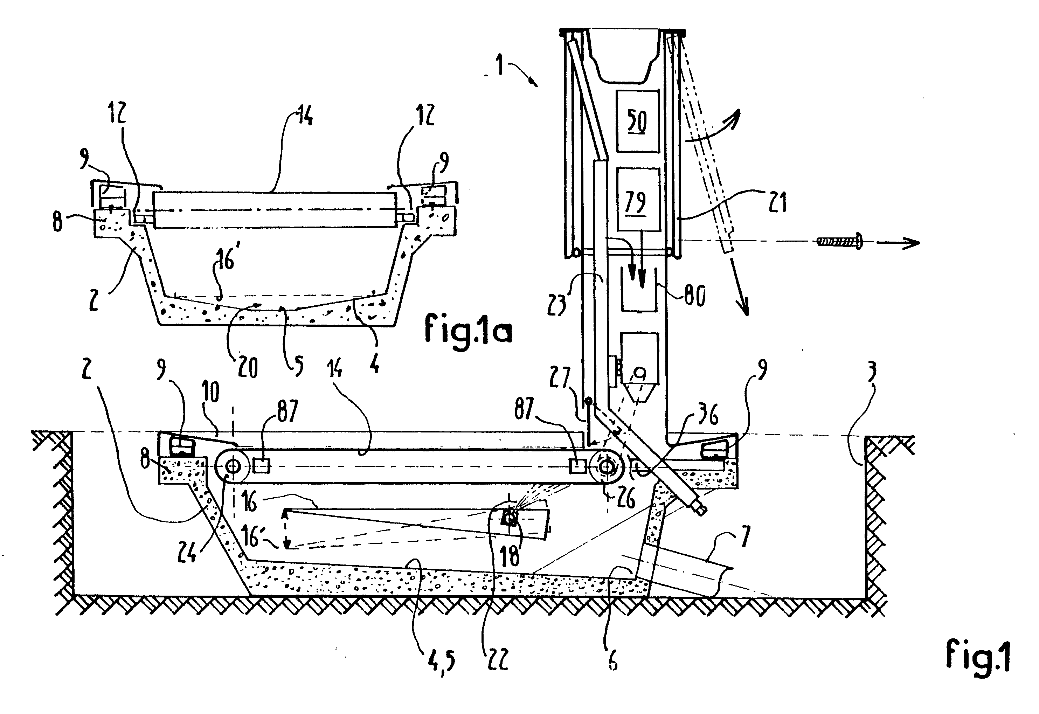

Sur les fig.1, 1a un îlot d'hygiène comprend principalement une colonne 1, un bac 2 enterré dans une fosse 3 et surmontée d'un tapis sans fin 14.

Le bac 2 est une cuve massive en béton moulé dont le fond 4 est incliné à la fois vers sa partie médiane 5 (fig.1a) et vers son extrémité 6 proche du conduit d'égout 7 ; le bac massif sert de support à toute la superstructure. Les rebords épais 8 du bac servent d'assise par l'intermédiaire d'un cadre 9 en profilé métallique à une margelle 10 en polyester renforcé revêtue de carrelage en céramique. Les rebords 8 du bac comportent deux feuillures latérales 12 servant de logement à un châssis 28 du tapis sans fin.

Au-dessous du tapis sans fin est disposé un récipient 16 de forme prismatique applatie ; le récipient est articulé autour d'un axe 18 pour pouvoir basculer d'une position horizontale (16) à une position inclinée de vidange (16'). La répartition de la masse du récipient est telle que lorsqu'il est vide il occupe une position horizontale 16 ; mais en raison du fait que son volume intérieur est décalé par rapport à l'axe d'articulation, lorsqu'une certaine quantité d'eau est présente dans le récipient, celui-ci bascule en position de vidange. Ce principe de vidange est connu en soit mais il trouve ici une application intéressante. On remarquera sur la fig.1a qu'un espace 20 est laissé libre au-dessous de l'extrémité du récipient en position basculée 16', er le fond 5 du bac, espace dans lequel peut s'écouler rapidement l'eau de la chasse, en direction de l'égout 7.

Le système de chasse présente l'avantage d'un automatisme lié à l'utilisation du tapis, sans qu'il soit nécessaire de prévoir d'autres moyens de commande ; on pourrait cependant imaginer des récipients d'un autre type dont la vidange par basculement ou par retrait du fond soit opérée par des moyens moteurs. L'eau de chasse a bien entendu pour fonction d'entraîner périodiquement les excréments solides tombés à l'aplomb de l'extrémité du tapis ou dans le réci pient lui même. L'eau de la chasse s'écoule du tapis 4 contre le brin inférieur duquel elle a été projetée par une rampe d'aspersion 22 qui sert en même temps d'axe 18 de pivotement au récipient 16. Pour être efficace le contenu d'une chasse doit être environ de 15 à 20 litres.

La colonne 2 constitue une armoire pour contenir différents organes de fonctionnement susceptibles d'entretien ou de renouvellement, auxquels un panneau amovible 21 permet l'accès ; on remarquera que, suivant une disposition constructive intéressante l'armoire est solidaire d'un bâti tubulaire 23 ancré dans le béton de la cuve lors du moulage ; les organes contenus dans l'armoire, notamment un automate et un boitier d'alimentation électrique, sont fixés au bâti ; l'un des montants du bâti qui en coporte deux sert de conduite principale d'alimentation en eau. A la base de l'armoire, et sur sa face en regard du tapis, un volet 27 est articulé pour être manoeuvré par un vérin, un électro-aimant, ou tout autre moyen mécanique afin de laisser passer les excréments solides déposés sur le tapis. A titre d'exemple d'autres moyens mécaniques de manoeuvre du volet, celui-ci pourra être en relation mécanique avec le bras de suspension de la bache suspendue décrite plus loin. On notera aussi que, comme dans les dispositifs antérieurs, une rampe arrose la partie inférieure de la colonne qui peut recevoir les urines.

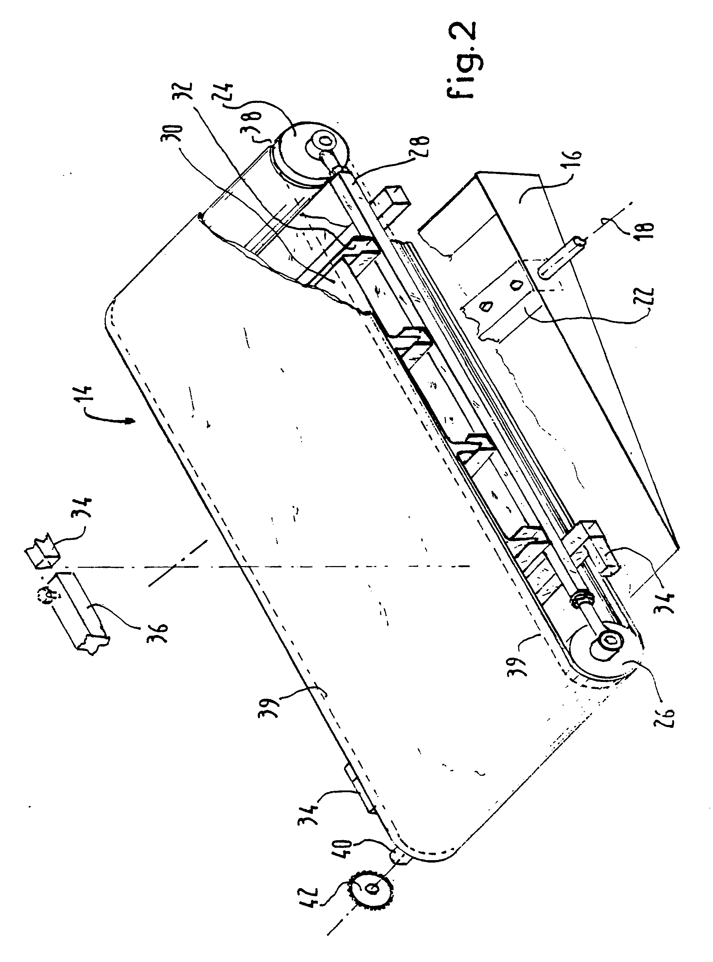

Sur la fig.2 un tapis sans fin 14 est revêtu d'un gravillon solidement incrusté donnant l'apparence d'un sol naturel. Le tapis est tendu entre deux rouleaux 24 et 26 supportés eux même par un châssis 28 fait d'un profilé métallique ; le brin supérieur du tapis repose sur des tablettes telles que 30 réalisées en tôle pliée dont les pieds sont engagés dans des traverses 32 en U soudées sur le châssis. Le châssis comporte en outre une paire d'embouts 34 pouvant être engagés pour y être fixé dans des manchons de forme correspondante 36 solidaires d'un bâti de la colonne lui même solidaire de la cuve en béton. On remarque à chacune des extrémités des rouleaux, des gorges 38 coopérant avec des nervures 39 du tapis 14. Le rouleau 26, normalement disposé à l'aplomb de la colonne 1, comporte un arbre 40 sur lequel peut être calé une roue dentée 42 d'entraînement.

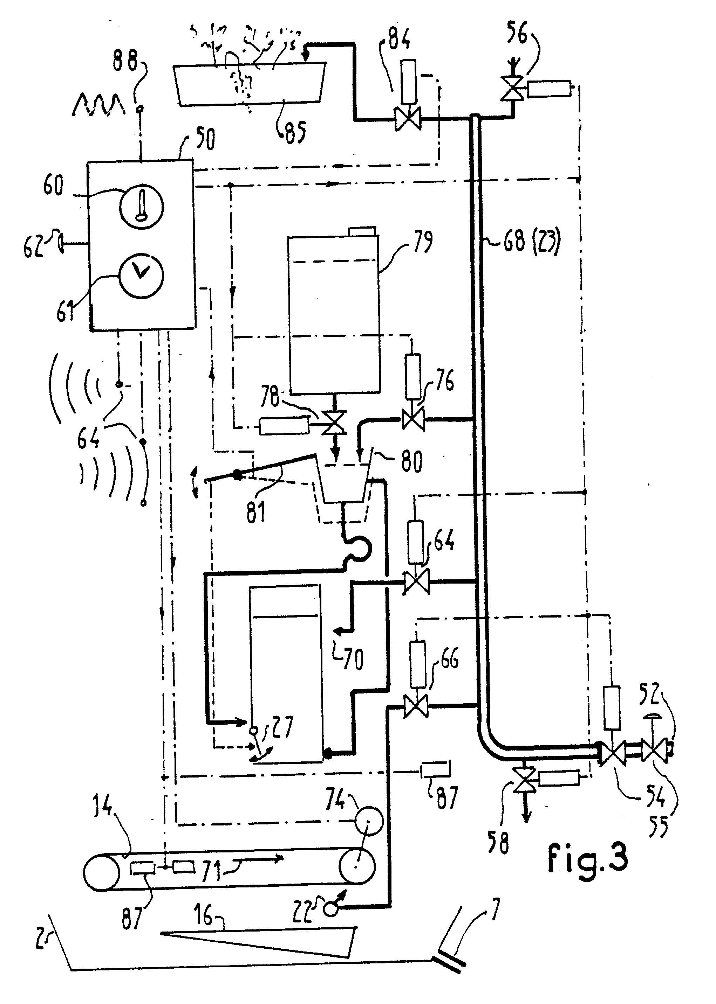

Le fonctionnement du dispositif, géré par l'automate 50, va être expliqué en référence à la fig.3, principalement. Après qu'un animal ait fait ses besoins sur le tapis ou contre la base de la colonne, son maître doit appuyer sur un poussoir 62 ; tant que l'animal et son maître ne se sont pas suffisamment éloignés de l'îlot, ce qui est détecté par les moyens d'émission réception hyperfréquence 64, le fonctionnement du dispositif est inhibé ; dès que la condition d'éloignement est remplie un cycle de lavage est initié : des électrovannes 64,66 sont ouvertes pour amener l'eau sous pression depuis la conduite principale 68 vers des rampes respectivement d'aspersion 70 du pied de colonne, et 22 du tapis ; simultanéement le tapis effectue un demi-tour (flèche 71) sous l'action d'un moteur 74 d'entrainement ; l'opération peut être renouvelée un certain nombre de fois sans qu'il ne se passe rien d'autre ; on notera toutefois qu'au fur et à mesure de ces opérations de lavage, de l'eau est recueuillie dans le récipient basculant 16 ; lorsqu'après un dernier lavage un niveau requis est atteint dans ce récipient, celui-ci bascule et produit le phénomène de chasse en direction de l'égout 7 ; cela peut se répéter plusieurs fois dans une journée. En fin de journée, de nuit par exemple, une horloge 61 incorporée dans l'automate, enclenche un cycle de nettoyage--désinfection : ce cycle commence par un lavage prolongé, ou repété, tel que sus-décrit, puis des électrovannes repectivement 76 d'alimentation en eau, et 78 d'alimentation en un produit désinfectant contenu dans un réservoir 79, sont ouvertes et alimentent une bache suspendue 80 ; lorsque la bache a reçu un certain poids de mélange désinfectant, elle agit sur un bras 81 de suspension qui agit pour refermer les électrovannes 76 et 78 ; la bache déverse son mélange au voisinage du pied de colonne et du volet 27 ; le mélange désinfectant atteint, par ecoulement naturel, le tapis et les parties sous-jacentes. Le contrôle de présence par hyperfréquence reste actif durant les cycles de lavage ou de nettoyage, de façon à interrompre ces cycles en cas d'approche d'une personne ou d'un animal.

L'ensemble de distribution d'eau dans la colonne comprend la conduite principale 68 dont l'entrée 52 est reliée au réseau de distribution par l'intermédiaire d'une électrovanne générale 54 et d'une vanne manuelle générale 55 ; la conduite 68 comporte à chacune de ses extrémités un couple d'électrovannes de purge 56, 58 placées l'une et l'autre sous la dépendance de moyens thermométriques 60 (thermosonde) détecteur de gel ; suivant des dispositions de perfectionnement, en cas de gel, l'électrovanne générale est fermée et les électrovannes de purge sont ouvertes ; il pourra est de même en cas de coupure de l'alimentation électrique générale ; on remarquera aussi la présence dans le tapis, et dans la colonne, de résistances électriques 87 dont le fonctionnement est placé sous la dépendance des moyens thermométriques. la conduite 68 alimente aussi, à travers une electrovanne 84, placée sous la dépendance de l'horloge, une jardinière ou autre bac à fleurs 85 coiffant la colonne ; enfin on a symbolisé par 88 un émetteur d'ultrasons audibles des chiens.

Bien que l'on ait décrit et/ou représenté une forme particulière de rélisation d'un ilôt d'hygiène pour animaux, comportant les perfectionnements de l'invention, il doit être compris que la portée de cette dernière n'est pas limitée à cette forme mais qu'elle s'étend aux ilôts d'hygiène comportants les perfectionnements définis plus haut d'une manière générale, ainsi qu'à leurs combinaisons.

## Revendications

1.- Dispositif d'ilôt d'hygiène pour animaux, du genre de dispositif, ou installation, d'hygiène comprennant une colonne pourvue d'une rampe d'aspersion, un tapis sans fin, une bordure, ou margelle, massive entourant le tapis et la colonne, et comportant un caniveau collecteur entourant le pied de la colonne, la colonne pouvant comporter à sa partie haute une jardinière, et constituant une armoire pour différents organes commandant le fonctionnement de l'ilôt, l'ensemble étant disposé au-dessus d'un bac raccordé à l'égout, caractérisé :

par le fait qu'il comporte un récipient intermédiaire (16) disposé entre le tapis sans fin (14) et le fond du bac (4,5), ce récipient étant destiné à recevoir et à contenir de l'eau de lavage du tapis sans fin, pour pouvoir être vidangé périodiquement afin de chasser les excréments tombés du tapis sur le fond du bac,
d'où il résulte l'avantage de permettre la récupération de l'eau du tapis en vue de son utilisation comme eau de chasse pour laver le bac ;

2.- Dispotif selon la revendication 1, caractérisé :

en ce que le récépient intermédiaire a une forme prismatique applatie et est articulé autour d'un axe horizontal (18), la répartition de la masse et du volume intérieur du récipient, par rapport à l'axe d'articulation, étant telle que lorsqu'il est rempli d'une certaine quantité d'eau s'écoulant du tapis il déverse brusquement son contenu dans le bac, et qu'après s'être vidangé de son contenu il reprenne une position horizontale dans laquelle il peut recevoir à nouveau une certaine quantité d'eau et éventuellement d'excréments en provenance du tapis,
d'où il résulte l'avantage de lier de façon automatique le fonctionnement de la chasse à l'utilisation qui est faite de l'installation ;

3.- Disposition selon la revendication 1, caractérisé :
en ce que le bac est une cuve massive (2) en béton dont toutes les faces internes sont inclinées en direction de la partie médiane longitudinale (2), elle-même inclinée en direction de l'égout (7),
d'où il résulte une possibilité de lavage très efficace et économique de l'installation au fur et à mesure de son fonctionnement, et une élimination quasi-totale des risques d'engorgement ;

4.- Dispositif selon la revendication 1, caractérisé :

en ce qu'il est prévu sur la colonne (1) des moyens manuels (62) d'enclenchement du cycle de lavage ;

5.- Dispositif selon la revendication 1, caractérisé :
en ce qu'il incorpore des moyens (64) d'émission et de réception d'ondes hyperfrécences (radar) pour détecter une présence quelconque dans le voisinage immédiat de l'îlôt et, dans ce cas, interdire le fonctionnement des moyens de lavage ;

6.- Dispositif selon la revendication 1, caractérisé :
en ce qu'il incorpore des moyens (88) d'émission d'un signal ultrasonore perceptible par les chiens, fonctionnant en permanence et destiné à créer chez les chiens une accoutumance à faire leurs besoins lorsqu'ils arrivent dans le voisinage de l'îlôt ;

7.- Dispositif selon la revendication 1, caractérisé :
en ce qu'il incorpore des moyens (87) de chauffage disposé dans le tapis (14) ainsi que dans la colonne.

fig.1

fig.1a

fig.2

EP 0 399 854 A1

EP 0 399 854 A1

fig.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A,D | EP-A-102861 (SOCIETE URBATECH ORGANISATION S.A.) <br> * page 7, lignes 30 - 38; figures 1, 2 *    & FR-A-2530120 | 1, 5, 6 | A01K1/01 |
| | --- | | |
| A | US-A-4262634 (PICCONE) | | |
| | --- | | |
| A | US-A-4231321 (COHEN) | | |
| | --- | | |
| A,D | US-A-4098229 (HAYNES) | | |
| | --- | | |
| A,D | FR-A-2406388 (MAILLE) | | |
| | --- | | |
| A,D | FR-A-2488487 (ZILBER) | | |
| | --- | | |
| A,D | US-A-3793988 (TRAEGER) | | |
| | --- | | |
| A,D | US-A-4050414 (KNOCHEL) | | |
| | --- | | |
| A,D | US-A-4242763 (WALKER) | | |
| | ----- | | |

**DOMAINES TECHNIQUES RECHERCHES (Int. Cl.5)**

A01K

Le présent rapport a été établi pour toutes les revendications

| Lieu de la recherche | Date d'achèvement de la recherche | Examinateur |
|---|---|---|
| LA HAYE | 28 JUIN 1990 | VON ARX V.U. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
........................................................................
& : membre de la même famille, document correspondant

EPO FORM 1503 03.82 (P0402)